# EUROPÄISCHE PATENTANMELDUNG

(11) **EP 1 873 361 A1**
(43) Veröffentlichungstag der Anmeldung: **02.01.2008**
(21) Anmeldenummer: 06013354.3
(22) Anmeldetag: 28.06.2006
(51) Int. Cl.: F01K 21/06, F22D 11/00, C02F 1/42

(54) **Messvorrichtung für Reinheitsmessungen eines Medienkreislaufs eines Kraftwerks und Verfahren zum Betreiben der Messvorrichtung**

(71) Anmelder: SIEMENS AKTIENGESELLSCHAFT, 80333 München (DE)
(72) Erfinder: Rziha, Michael, 91054 Erlangen (DE)

(57) **Zusammenfassung**

Die Erfindung betrifft eine Messvorrichtung (4, 52) für Reinheitsmessungen eines Medienkreislaufs eines Kraftwerks mit einer Ionentauschereinrichtung (6) und einem Messmittel (30, 46) zur Messung eines Parameters eines die Ionentauschereinrichtung (6) durchströmenden Medienstroms.

Um bei einem Betriebsstart der Ionentauschereinrichtung (6), z.B. bei einem Anfahren des Kraftwerks, schnell zuverlässige Messungen erhalten zu können, wird vorgeschlagen, dass die Ionentauschereinrichtung (6) zwei Strömungswege (42, 44, 54, 56) für zwei unterschiedliche Betriebsmodi des Kraftwerks aufweist.

## Beschreibung

Die Erfindung betrifft eine Messvorrichtung für Reinheitsmessungen eines Medienkreislaufs eines Kraftwerks mit einer Ionentauschereinrichtung und einem Messmittel zur Messung eines Parameters eines die Ionentauschereinrichtung durchströmenden Medienstroms. Außerdem betrifft die Erfindung ein Verfahren zum Betreiben einer solchen Messvorrichtung.

In Wasserdampfkreisläufen von Kraftwerken wird Wasser verdampft und unter hohem Druck einer Turbine zugeführt, an der der Dampf entspannt und abkühlt. Die hohe Reinheit des Wassers bzw. Dampfs in einem solchen Kreislauf ist von erheblicher Bedeutung, da Unreinheiten wie NaCl, CaCO₃, MgCO₃ usw. beim Verdampfen des Wassers größtenteils als Niederschlag zurückbleiben und so den Verdampfer beschädigen. Andere Verbindungen, wie z.B. Silikate, aber auch kleinste Mengen der oben genannten Unreinheiten, gehen mit in die Dampfphase über und können sich beim Abkühlen des Dampfs an Turbinenschaufeln absetzen, was zu Korrosion und Ablagerungen an der Turbine führen kann.

Es ist daher bekannt, Reinheitsmessungen des Wasserkreislaufs eines Kraftwerks durchzuführen, bei denen beispielsweise die Kationenleitfähigkeit des Wassers gemessen wird, die ein Maß für die Reinheit des Wassers bzw. Dampfs im Wasserkreislauf ist. Hierbei wird mit Hilfe eines stark sauren Kationentauschers das dem Wasserkreislauf zugegebene Alkalisierungmittel zum Neutralisieren von störenden Säuren entzogen und es werden Kationen ausgetauscht, z.B. wird das Na⁺ aus NaCl dem Wasser entzogen und anstelle dessen H⁺ in das Wasser gegeben, wodurch HCl entsteht, das eine dreimal größere Leitfähigkeit hat als NaCl. Die Leitfähigkeit des Wassers wird daher hinter und gegebenenfalls zusätzlich vor dem Kationentauscher gemessen und daraus auf die Reinheit des Wassers geschlossen.

Beim Anfahren eines Kraftwerks bzw. einer Turbine spielt die Reinheitsmessung eine große Rolle, denn ihre Ergebnisse sind ausschlaggebend dafür, ob Dampf der Turbine zugeführt werden kann oder ob das Wasser weiter gereinigt werden muss.

Es ist daher die Aufgabe der Erfindung, eine Messvorrichtung für Reinheitsmessungen eines Medienkreislaufs eines Kraftwerks und ein Verfahren zum Betrieb einer solchen Messvorrichtung anzugeben, mit der eine Energieerzeugungseinheit, wie eine Turbine oder ein Kraftwerk, zügig in Betrieb genommen werden kann.

Die erstgenannte Aufgabe wird durch eine Messvorrichtung der Eingangs genannten Art gelöst, bei der die Ionentauschereinrichtung erfindungsgemäß zwei Strömungswege für zwei unterschiedliche Betriebsmodi des Kraftwerks aufweist.

Die Erfindung geht hierbei von der Überlegung aus, dass Kraftwerke heute immer variabler betrieben werden, wodurch sie häufiger heruntergefahren und wieder angefahren werden als früher. Es ist daher immer wichtiger, eine nur kurze Anfahrphase zu haben und mithin bereits nach kurzer Zeit zuverlässige Werte der Reinheitsmessung gewinnen zu können. Nach einem Stillstand des Kreislaufs ist das Wasser in einem Ionentauscher für Messungen ungeeignet, da ein Ionentauscher bei einem Wasserstillstand die Ionen in das Wasser abgibt, die er im regulären Betrieb einfängt. Der Ionentauscher muss daher zunächst eine Weile gespült werden, bevor zuverlässige Messwerte zu erwarten sind. Versuche haben gezeigt, dass er mit etwa der dreifachen Menge an Wasser wie sein eigenes Volumen gespült werden muss. Da die Lebensdauer eines Ionentauschers mit dessen Volumen zunimmt, braucht er für einen effizienten Betrieb ein gewisses Volumen, wodurch eine lange Spülzeit festgelegt ist. Durch diese einander widerstrebenden Bedingungen können zuverlässige Messwerte erst nach einer verhältnismäßig langen Wartezeit nach einem Anfahren der Ionentauschereinrichtung erreicht werden. Zur Lösung dieser widerstrebenden Bedingungen kann ein hoher Spülfluss durch den Ionentauscher zu Beginn einer Anfahrphase gewählt werden. Dieser verhindert jedoch das Aufbauen eines Reaktionsgleichgewichts im Ionentauscher, wodurch eine korrekte Messung zwar beschleunigt, jedoch nicht befriedigend schnell erreicht wird. Außerdem ist die Einrichtung eines speziellen Spülflusses mit einem hohen Steueraufwand der Messvorrichtung verbunden.

Durch zwei Strömungswege für zwei unterschiedliche Betriebsmodi des Kraftwerks bzw. der Ionentauschereinrichtung können die Strömungswege an die Betriebsmodi angepasst und somit einander widerstrebende Bedingungen auf die beiden Strömungswege verteilt werden. Es kann eine hohe Lebensdauer eines Ionentauschers mit einer schnellen Gewinnung von zuverlässigen Messwerten verbunden werden.

Der Medienkreislauf kann ein Wasserkreislauf sein, der den dampfförmigen Aggregatzustand des Wassers mit umfassen kann. Die Reinheitsmessungen können eine Reinheitsüberwachung sein. Die Strömungswege verlaufen zweckmäßigerweise beide durch zumindest einen Ionentauscher der Ionentauschereinrichtung. Das Messmittel kann ein Leitfähigkeitssensor zur Messung der Leitfähigkeit des Mediums, insbesondere des Wassers oder Dampfs sein. Die Messvorrichtung kann Auswertemittel umfassen, z.B. elektronische Auswertemittel, die jedoch nicht vorhanden sein müssen oder separat zur Messvorrichtung sein können. Die Ionentauschereinrichtung umfasst zweckmäßigerweise einen Kationentauscher. Das Kraftwerk kann eine einzelne oder mehrere Turbinen mit daran angeschlossenem Medienkreislauf sein, ein Gesamtkraftwerk, wie eine GuD-Anlage, oder nur ein Teil davon.

In einer vorteilhaften Ausgestaltung der Erfindung ist einer der Strömungswege für einen Betriebsstart der Ionentauschereinrichtung vorgesehen. Es können schnell zuverlässige Messwerte erreicht werden. Hierfür ist das Durchströmungsvolumen dieses Strömungswegs zweckmäßigerweise kleiner als das des anderen Strömungswegs. Der Betriebsstart nach einer Betriebspause kann ein Betriebsmodus, insbesondere des Kraftwerks, sein, z.B. ein Teil eines Anfahrmodus des Kraftwerks.

Vorteilhafterweise umfassen beide Strömungswege einen eigenen Ionentauscher, insbesondere einen Kationentauscher. Die Ionentauscher können jeder für sich an den jeweiligen Betriebsmodus angepasst und individuell ausgetauscht werden. In einer anderen vorteilhaften Ausgestaltung verlaufen beide Strömungswege durch einen einzigen Ionentauscher, der zwei unterschiedliche, insbesondere parallele Strömungswege aufweist, von denen zumindest einer separat vom anderen betrieben werden kann. Es kann die Zahl von zu wartenden Teilen verringert werden.

Es wird außerdem vorgeschlagen, dass einer der Ionentauscher für einen Anfahrbetrieb bzw. einen Betriebsstart vorgesehen ist und ein kleineres Durchströmungsvolumen aufweist, als der andere Ionentauscher. Es kann eine schnelle Spülung und damit eine schnelle Betriebsbereitschaft erzielt werden.

Eine weitere Ausführungsform der Erfindung ist dadurch gekennzeichnet, dass die Strömungswege parallel angeordnet sind. Es kann hierdurch sowohl ein unabhängiger Betrieb der beiden Strömungswege zum Zweck der Ressourcenschonung als auch ein beispielsweise kurzzeitiger gemeinsamer Betrieb zum Erreichen eines störungsfreien Messübergangs veranlasst werden. Insbesondere sind die beiden Ionentauscher der beiden Strömungswege parallel angeordnet.

Eine effiziente Nutzung des Messmittels und eine preiswerte Messvorrichtung kann erreicht werden, wenn beide Strömungswege einzeln mit dem Messmittel verbindbar sind, wobei der jeweils andere Strömungsweg vom Messmittel trennbar ist. Es kann ein Messmittel für beide Strömungswege unabhängig voneinander verwendet werden.

Weisen beide Strömungswege jeweils ein Messmittel zur Messung des Parameters auf, so können die von den Messmitteln ausgegebenen Werte verglichen und ein schnelles Umschalten zwischen den Strömungswegen erreicht werden. Zweckmäßigerweise ist jedem Ionentauscher ein eigenes Messmittel zur Messung des Parameters zugeordnet, das insbesondere hinter dem jeweiligen Ionentauscher angeordnet ist.

Ein einfacher Betrieb der Messvorrichtung kann durch eine manuelle Steuerung erreicht werden, z.B. indem manuell zwischen den Strömungswegen gewechselt wird, Ventile manuell betätigt werden oder das Messmittel manuell von einem Bediener ausgelesen wird. Durch eine Steuereinheit zum Aktivieren eines der Strömungswege bei einem Anfahren des Kraftwerks kann ein effizientes Anfahren erreicht werden. Außerdem kann durch ein von der Steuereinheit veranlasstes Umschalten zwischen den Strömungswegen, beispielsweise durch ein automatisches Auslesen von Messwerten, ein für ein Anfahrbetrieb vorgesehener Ionentauscher durch einen kurzen Anfahrbetrieb geschont werden.

Die auf das Verfahren gerichtete Aufgabe wird durch ein Verfahren der Eingangs genannten Art gelöst, bei dem erfindungsgemäß zu einem Betriebsstart der Ionentauschereinrichtung ein erster Strömungsweg der Ionentauschereinrichtung aktiviert und eine Reinheitsmessung darüber betrieben wird und bei einem späteren regulären Betrieb der erste Strömungsweg gesperrt und eine Messung über einen zweiten Strömungsweg betrieben wird. Durch den unterschiedlichen Betrieb der beiden Strömungswege für zwei unterschiedliche Betriebsmodi des Kraftwerks bzw. der Ionentauschereinrichtung können die Strömungswege an die Betriebsmodi angepasst und somit einander widerstrebende Bedingungen auf die beiden Strömungswege verteilt werden. Es kann eine hohe Lebensdauer eines Ionentauschers mit einer schnellen Gewinnung von zuverlässigen Messwerten verbunden werden. Ein Betriebsstart kann nach eine Betriebspause stattfinden und kann zumindest eine Zeitdauer bis zu einem Gleichgewichtsbetrieb des Ionentauschers für einen regulären Betrieb umfassen.

Eine störungsarme und zügige Umschaltung zwischen den Strömungswegen kann erreicht werden, wenn zum Betriebsstart der Ionentauschereinrichtung Reinheitsmessungen über beide Strömungswege betrieben werden.

Die Erfindung wird anhand von Ausführungsbeispielen näher erläutert, die in den Zeichnungen dargestellt sind.

Es zeigen:
- FIG 1: eine Messvorrichtung mit zwei Kationentauschern in einem Probenahmesystem eine Wasserkreislaufs eines Kraftwerks und
- FIG 2: eine weitere Messvorrichtung mit einem zwei parallele Strömungswege umfassenden Kationentauscher.

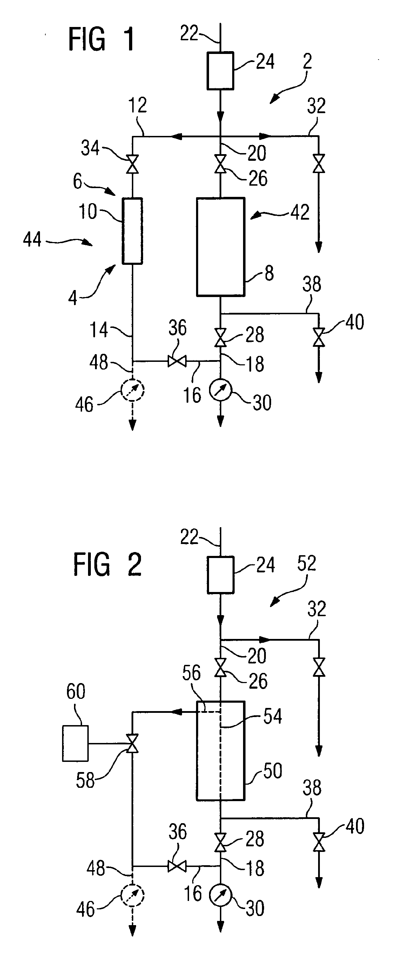

FIG 1 zeigt schematisch einen Ausschnitt aus einem Probenahmesystem 2 eines Wasserkreislaufs einer nicht dargestellten Dampfturbine eines Kraftwerks mit einer Messvorrichtung 4. Die Messvorrichtung 4 umfasst eine Ionentauschereinrichtung 6 mit zwei verschieden großen Ionentauschern 8, 10, die als Kationentauscher ausgeführt und über mehrere Leitungen 12, 14, 16, 18, 20 miteinander verbunden sind.

Während eines normalen Betriebs der Dampfturbine wird ein Volumen von 60 1/h sehr reines, alkalisiertes Wasser in Dampfform aus dem übrigen Wasserkreislauf entnommen und dem Probenahmesystem 2 über eine Probenahmeleitung 22 zugeführt. In einem Probenahmekühler 24 wird der Dampf kondensiert. Von den 60 1/h Wasser werden 10 1/h Wasser über ein geöffnetes Ventil 26 dem großen, 1,5 l fassenden Ionentauscher 8 zugeführt. Dort wird die Alkalisierung des Wassers neutralisiert und Kationen von beispielsweise Salzen werden gegen H⁺-Ionen ausgetauscht. Das so veränderte Wasser wird über die Leitung 18 durch ein geöffnetes Ventil 28 einem als Leitfähigkeitsmessgerät ausgeführten Messmittel 30 zugeführt, das die Leitfähigkeit des Wassers misst und anzeigt. Aus der Leitfähigkeit lässt sich die Reinheit des Wassers bestimmen. Die übrigen 50 l/h werden über eine Leitung 32 in andere Probenbereiche des Probenahmesystems geleitet, z.B. in eine Handprobenahme, aus der das Wasser entnommen und analysiert wird.

Bei einem Stillstand der Turbine ruht das im Ionentauscher 8 verbliebene Wasser, so lange, bis die Turbine wieder angefahren wird und der Fluss von 60 1/h erneut beginnt. Um zu stabilen Messwerten zu kommen, muss das Volumen von 1,5 l im Ionentauscher 8 etwa drei mal ausgetauscht werden, was bei einem Fluss von 10 l/h etwa 26 min dauern würde. Erst dann können stabile Messwerte vom Messmittel 30 erhalten werden und es kann entschieden werden, ob das Wasser rein genug ist, um als Dampf der Turbine zugeführt zu werden. Um diese lange Wartezeit zu umgehen, umfasst die Messvorrichtung 4 den kleinen Ionentauscher 10, der ein Volumen von 150 ml fasst.

Bei einem Anfahren des Kraftwerks bzw. der Turbine wird ein Strom von 10 1/h Wasser über die Leitung 12 und ein geöffnetes Ventil 34 dem Ionentauscher 10 zugeführt, der auf diese Weise nach etwa 3 min ausreichend gespült ist. Das Wasser wird über die Leitung 14 und ein geöffnetes Ventil 36 dem Messmittel 30 zugeführt, so dass Reinheitsmessungen ausgeführt werden. Das Ventil 28 ist hierbei geschlossen. Parallel zu diesem zunächst kurzen Spül- und dann Messvorgang wird ein Strom von 10 l/h Wasser durch den Ionentauscher 8 geleitet, der auf diese Weise gespült wird, um nach 26 min einsatzbereit zu sein. Das Wasser aus dem Ionentauscher 8 wird in eine Verwerfleitung 38 geführt und über ein geöffnetes Ventil 40 abgelassen. Ist der Ionentauscher 8 betriebsbereit, werden die Ventile 34, 36, 40 geschlossen und das Ventil 28 geöffnet, so dass über einen Strömungsweg 42 über den großen Ionentauscher 8 die Reinheitsmessung allein aufrechterhalten werden kann und ein Strömungsweg 44 über den kleinen Ionentauscher 10 geschlossen werden kann. Beim Strömungsweg 42 bekommt das Messmittel 30 das Probenwasser nun vom Ionentauscher 8, der bereits im Gleichgewichtszustand ist, und da sich durch das Schalten der Ventile 34, 36, 40 kein Strom durch den Ionentauscher 8 ändert, bleibt das Gleichgewicht erhalten und es können sofort zuverlässige Messergebnisse erzielt werden.

In einer erweiterten Ausführungsform umfasst die Messvorrichtung 4 ein zweites Messmittel 46, das über eine zusätzliche Leitung 48 mit dem Ionentauscher 10 verbunden ist. Auf diese Weise kann bei einem Anfahren der Turbine das Probenwasser aus dem Ionentauscher 10 dem Messmittel 46 zugeführt werden, wobei das Ventil 36 geschlossen ist. Parallel dazu wird das Probenwasser aus dem Ionentauscher 8 bei geöffnetem Ventil 28 dem Messmittel 30 zugeführt, so dass die beiden Messmittel 30, 46 parallel ausgelesen werden können. Auf diese Weise kann ein Erreichen eines aussagekräftigen Gleichgewichtszustands nach einem Spülen des Ionentauschers 8 schnell erkannt werden, nämlich durch ein Angleichen der Messwerte der beiden Messmittel 30, 46.

Bei einem Durchfluss von 10 l/h beträgt die Lebensdauer des kleinen Ionentauschers 10 etwa 3-4 h, so dass er für einige Anfahrprozesse geeignet ist. Danach muss er ausgetauscht werden. Der große Ionentauscher 8 hat bei gleichem Durchfluss eine Lebensdauer von 3-4 Wochen und muss dann ausgetauscht werden. Werden in dieser Zeit von 3-4 Wochen nicht zu viele Anfahrprozesse gefahren, so kann der Austausch der Ionentauscher 8, 10 durch einen gemeinsamen Kationentauscher 50 vereinfacht werden, der in FIG 2 dargestellt ist.

FIG 2 zeigt eine Messvorrichtung 52 mit dem Kationentauscher 50. Die nachfolgende Beschreibung beschränkt sich im wesentlichen auf die Unterschiede zum Ausführungsbeispiel aus FIG 1, auf das bezüglich gleichbleibender Merkmale und Funktionen verwiesen wird. Im Wesentlichen gleichbleibende Bauteile sind grundsätzlich mit den gleichen Bezugszeichen beziffert. Der Kationentauscher 50 weist zwei Strömungswege 54, 56 auf, den Strömungsweg 54 für einen regulären Betrieb und den Strömungsweg 56 für einen Anfahrbetrieb des Kraftwerks. Der Strömungsweg 56 verläuft nur durch etwa 300 ml des vorderen Teils des Kationentauschers 50, so dass dieser Teil schnell durchspült ist, analog wie der Ionentauscher 10. Bei einem Anfahrbetrieb kann ein Ventil 58 geöffnet werden, so dass 10 1/h durch den Strömungsweg 56 und zusätzlich 10 1/h durch den Strömungsweg 54 fließen. Der 300 ml große vordere Teil des Kationentauschers wird von beiden Strömungswegen durchflossen und zwar mit 20 l/h, so dass dieser Teil ähnlich schnell durchspült ist, wie der Ionentauscher 10. Bei einem regulären Betrieb ist das Ventil 58 geschlossen. Mit Hilfe einer Steuereinheit 60 kann das Ventil 58 angesteuert werden, ebenso wie ggf. die weiteren Ventile 36, 28 und 40. Hierdurch kann von der Steuereinheit ein Umschalten zwischen den Strömungswegen 54, 56, beispielsweise durch ein automatisches Auslesen von Messwerten aus den Messmitteln 30, 46, veranlasst werden. Hierdurch kann ein Betriebsstart kurz gehalten und der für einen Betriebsstart vorgesehener Ionentauscher 10 bzw. der vordere Teil des Ionentauschers 50 geschont werden. Alternativ ist ein Handbetrieb denkbar.

## Patentansprüche

1. Messvorrichtung (4, 52) für Reinheitsmessungen eines Medienkreislaufs eines Kraftwerks mit einer Ionentauschereinrichtung (6) und einem Messmittel (30, 46) zur Messung eines Parameters eines die Ionentauschereinrichtung (6) durchströmenden Medienstroms,
**dadurch gekennzeichnet, dass** die Ionentauschereinrichtung (6) zwei Strömungswege (42, 44, 54, 56) für zwei unterschiedliche Betriebsmodi des Kraftwerks aufweist.

2. Messvorrichtung (4, 52) nach Anspruch 1,
**dadurch gekennzeichnet, dass** einer der Strömungswege (44, 56) für einen Betriebsstart der Ionentauschereinrichtung (6) vorgesehen ist.

3. Messvorrichtung (4) nach Anspruch 1 oder 2,
**dadurch gekennzeichnet, dass** beide Strömungswege (42, 44) einen eigenen Ionentauscher (8, 10) aufweisen.

4. Messvorrichtung (4) nach Anspruch 3,
**dadurch gekennzeichnet, dass** einer der Ionentauscher (10) für einen Anfahrbetrieb vorgesehen ist und ein kleineres Durchströmungsvolumen aufweist, als der andere Ionentauscher (8).

5. Messvorrichtung (4, 52) nach einem der vorhergehenden Ansprüche,
**dadurch gekennzeichnet, dass** die Strömungswege (42, 44, 54, 56) parallel angeordnet sind.

6. Messvorrichtung (4, 52) nach einem der vorhergehenden Ansprüche,
**dadurch gekennzeichnet, dass** beide Strömungswege (42, 44, 54, 56) einzeln mit dem Messmittel (30, 46) verbindbar sind, wobei der jeweils andere Strömungsweg (42, 44, 54, 56) vom Messmittel (30, 46) trennbar ist.

7. Messvorrichtung (4, 52) nach einem der vorhergehenden Ansprüche,
**dadurch gekennzeichnet, dass** beide Strömungswege (42, 44, 54, 56) jeweils ein Messmittel (30, 46) zur Messung des Parameters aufweisen.

8. Messvorrichtung (4, 52) nach einem der vorhergehenden Ansprüche,
**gekennzeichnet durch** eine Steuereinheit (60) zum Aktivieren eines der Strömungswege (42, 44, 54, 56) bei einem Anfahren des Kraftwerks.

9. Verfahren zum Betreiben einer Messvorrichtung (4, 52) für Reinheitsmessungen eines Medienkreislaufs eines Kraftwerks mit einer Ionentauschereinrichtung (6) und einem Messmittel (30, 46) zur Messung eines Parameters eines die Ionentauschereinrichtung (6) durchströmenden Medienstroms,
**dadurch gekennzeichnet, dass** zu einem Betriebsstart der Ionentauschereinrichtung (6) ein erster Strömungsweg (44, 56) der Ionentauschereinrichtung aktiviert und eine Reinheitsmessung darüber betrieben wird und bei einem späteren regulären Betrieb der erste Strömungsweg (44, 56) gesperrt und eine Messung über einen zweiten Strömungsweg (42, 54) betrieben wird.

10. Verfahren nach Anspruch 9,
**dadurch gekennzeichnet, dass** zum Betriebsstart der Ionentauschereinrichtung (6) Reinheitsmessungen über beide Strömungswege (42, 44, 54, 56) betrieben werden.
